# EUROPÄISCHE PATENTANMELDUNG

(11) **EP 2 161 062 A2**
(43) Veröffentlichungstag der Anmeldung: **10.03.2010**
(21) Anmeldenummer: 09167452.3
(22) Anmeldetag: 07.08.2009
(51) Int. Cl.: B01D 1/00, B01D 5/00

(54) **Subboiling-Apparatur**

(30) Priorität: 08.09.2008 DE 202008011956 U
(71) Anmelder: Mikrowellen-Systeme MWS GmbH, 9435 Heerbrugg (CH)
(72) Erfinder: Lautenschläger, Werner, 88299 Leutkirch (DE)
(74) Vertreter: Rupp, Christian

(57) **Zusammenfassung**

Subboiling-Apparatur (S) zur Destillation insbesondere aggressiver Chemikalien, aufweisend:
einen strahlungstransparenten, nichtsphärischen Destillationsbehälter (1) zur Aufnahme eines zu destillierenden Lösemittels (L),
wenigstens ein Heizmittel (10) zum berührungslosen Erwärmen des Lösemittels (L),
einen Temperatursensor (11) zur Erfassung der Oberflächentemperatur des Destillationsbehälters (1) und/oder der Lösemitteltemperatur,
ein in Fluidkommunikation zum Destillationsbehälter (1) stehendes Kühlsystem (20), und
einen mit dem Kühlsystem (20) in Fluidkommunikation stehenden Kondensatbehälter (30) zum Sammeln des Destillats (D), wobei
der Destillationsbehälter (1) drehbar gelagert ist,
die Drehachse (M) des Destillationsbehälters (1) im Wesentlichen waagerecht angeordnet ist, und
eine Temperatursteuerung vorgesehen ist, die derart ausgebildet ist, dass, basierend auf der durch den Temperatursensor (11) erfassten Temperatur, die Heizelemente (10) derart angesteuert werden, dass die Lösemitteltemperatur unterhalb des Siedepunktes bleibt.

## Beschreibung

Die vorliegende Erfindung beschreibt eine Subboiling-Apparatur zur Destillation insbesondere aggressiver Chemikalien aufweisend einen Destillationsbehälter, ein Kühlsystem und einen Kondensatbehälter, welche, in dieser Reihenfolge, in Fluid-Kommunikation stehen.

Unter Subboiling bzw. der Subboiling Destillation ist im Folgenden die Destillation zu verstehen, bei der das zu destillierende Produkt zur Verdampfung bzw. Destillation lediglich bis unterhalb des Siedepunktes erhitzt wird, diesen aber nicht erreicht oder gar überschreitet.

Aus dem Stand der Technik sind zahlreiche Destillationsverfahren bekannt.

Die DE 203 00 046 U1 sowie die DE 35 26 644 C2 beispielsweise zeigen einen Rotationsverdampfer zum automatischen destillieren, bei dem ein zu verdampfendes Produkt in einem Verdampferkolben aufgenommen ist, welcher zum Erwärmen in ein Heizbad hineinragt. Mittels eines motorischen Rotationsantriebs wird der Verdampferkolben in dem Heizbad gedreht. Die Anordnung weist ferner einen Kühler auf, in dem das aus dem Produkt verdampfte Destillat in ein Kondensat kondensiert. Die Destillation wird dabei unter Vakuum durchgeführt, um die Siedetemperatur des zu verdampfenden Produktes herabzusetzen. Der Verdampferkolben ist dabei derart in das Heizbad eingetaucht, dass der Bereich, in dem das zu verdampfende Produkt an der Verdampferkolbenwand anliegt, im direkten Kontakt mit dem Heizbad steht.

Ferner sind aus dem Stand der Technik zahlreiche Verfahren zur Gewinnung von Flusssäure oder Salzsäure oder anderer aggressiver Chemikalien bzw. Säuren bekannt. Beispielhaft sei hier auf die Druckschriften EP 0 582 914 A1, DE 199 48 206 A1, DE 1 221 614 B, und CH 379 473 A verwiesen. Alle bekannten Verfahren verlangen hierbei die Destillation in bzw. mit Hilfe von Destillationskolonnen und gegebenenfalls auch unter Vakuum.

Insbesondere der Prozessablauf unter Vakuum sorgt für ein Herabsetzen der Siedetemperatur, wodurch das zu destillierende Produkt schon bei niedrigeren Temperaturen zu sieden anfängt. Da das Produkt schneller zu sieden anfängt, kommt es auch eher zu der beim Sieden üblichen Blasenbildung, wobei die zerplatzenden Blasen Schmutzpartikel o.ä. aus dem Produkt mitreißen und diese in das verdampfte Destillat schleudern, wodurch dieses verunreinigt ist.

Es ist somit Aufgabe der Erfindung, eine Vorrichtung zur Verfügung zu stellen, mit der ein hochreines Destillat, insbesondere auch von aggressiven Chemikalien, bei besonders einfachem Destillations-Aufbau erhalten wird.

Diese Aufgabe wird durch die Merkmale des unabhängigen Anspruchs geschützt. Die abhängigen Ansprüche bilden den zentralen Gedanken der Erfindung in besonders vorteilhafter Weise weiter.

Gemäß der Erfindung wird eine Subboiling-Apparatur zur Destillation insbesondere aggressiver Chemikalien zur Verfügung gestellt. Die Subboiling-Appartur weist dabei auf: einen strahlungstransparenten, nichtsphärischen Destillationsbehälter zur Aufnahme eines zu destillierenden Lösemittels, wenigstens ein Heizmittel zum berührungslosen Erwärmen wenigstens eines Teils des Lösemittels, einen Temperatursensor zur Erfassung der Oberflächentemperatur des Destillationsbehälters und/oder der Lösemitteltemperatur, ein in Fluidkommunikation zum Destillationsbehälter stehendes Kühlsystem, und einen mit dem Kühlsystem in Fluidkommunikation stehenden Kondensatbehälter zum Sammeln des Destillats. Der Destillationsbehälter ist drehbar gelagert, wobei die Drehachse des Destillationsbehälters im Wesentlichen waagrecht angeordnet ist. Ferner ist eine Temperatursteuerung vorgesehen, die derart ausgebildet ist, dass, basierend auf der durch den Temperatursensor erfassten Temperatur, die Heizmittel derart angesteuert werden, dass die Lösemitteltemperatur unterhalb des Siedepunkts bleibt.

Der Destillationsbehälter weist vorteilhafterweise eine im Wesentlichen zylindrische Form auf.

Ferner vorteilhafterweise ist der Temperatursensor ein Infrarotsensor, wobei dieser vorzugsweise in der Nähe der Umfangsfläche des Destillationsbehälters angeordnet und in Rotationsrichtung dem Heizmittel nachgeordnet ist.

Vorzugsweise sind die Heizmittel Strahlungs-Heizmittel, besonders vorzugsweise Halogen-Heizstrahler.

Das Kühlsystem weist in besonders vorteilhafter Weise eine Kondensationsspirale auf, welche mit dem Destillationsbehälter und dem Kondensatbehälter verbunden ist, sowie einen Kühler.

Ferner vorteilhafter Weise weist der Kühler einen Ventilator auf, der gleichzeitig als Absaugung dient. Der Ventilator weist dabei vorteilhafter Weise einen säureempfindlichen Sensor zum Erkennen von Schäden an der Subboiling-Appartur auf.

Der Kondensatbehälter weist vorzugsweise eine Öffnung auf, die zur Umgebung des Ventilators hin gerichtet ist.

Die Subboiling-Appartur weist ferner vorteilhafter Weise eine Pumpe zum Zuführen von Lösemittel in den Destillationsbehälter auf.

Besonders vorzugsweise weist die Subboiling-Appartur einen Lösemittelbehälter auf, welcher direkt in Fluidkommunikation zum Destillationsbehälter steht, und die Pumpe, welche an eine Entlüftung des Kondensatbehälters angebracht ist, derart ausgebildet ist, dass durch Anlegen eines Vakuums an der Entlüftung Lösemittel aus dem Lösemittelbehälter in den Destillationsbehälter eingeleitet wird.

Vorzugsweise sind die Öffnung und die Entlüftung identisch.

Besonders vorzugsweise ist unterhalb des Destillationsbehälters, des Kühlsystems und/oder des Kondensatbehälters wenigstens ein Auffangbecken angeordnet, welches mit einem Sensor zur Erkennung von Lösemittel bzw. Destillat oder Kondensat in dem Auffangbecken ausgestattet ist.

In besonders vorteilhafter Weise sind alle mit dem Lösemittel und Destillat in Berührung kommenden Teile der Subboiling-Appartur, insbesondere der Destillationsbehälter, aus chemikalienresistentem Material, vorzugsweise aus PTFE-Material hergestellt.

Die Subboiling-Appartur weist einen drehbar gelagerten Destillationsbehälter mit im Wesentlichen waagerecht angeordneter Drehachse auf, sowie eine Temperatursteuerung, die derart ausgebildet ist, dass, basierend auf der durch den Temperatursensor erfassten Temperatur, die Heizelemente derart angesteuert werden, dass die Lösemitteltemperatur unterhalb des Siederpunktes bleibt.

Durch die Rotation des Behälters entsteht aufgrund der Viskosität des Lösemittels und dessen damit verbundener begrenzter Ablaufgeschwindigkeit ein dünner Film der Flüssigkeit auf der Behälteroberfläche. Dieser Lösemittelfilm weist eine besonders große Oberfläche auf, da der Destillationsbehälter eine nichtsphärische Form, vorzugsweise eine zylindrische Form aufweist.

Durch die Strahlungstransparenz des Destillationsbehälters wird dieser nicht direkt erhitzt, wodurch eine gezielte Oberflächenverdampfung des Lösemittelfilms und somit eine gezielte Destillation des Lösemittels gewährleistet werden kann. Durch die im Wesentlichen waagerechte Anordnung der Drehachse des Destillationsbehälters wird die mit einem Lösemittelfilm zu benetzende Oberfläche des Destillationsbehälters noch weiter maximiert, wodurch der Prozess außerdem auch schnell durchzuführen ist. Ferner wird, da die Wärmeenergie überwiegend zur Verdampfung des dünnen Lösemittelfilms aufgewendet wird und nur zu einem geringen Teil von der Destillationsbehälterwand aufgenommen wird, eine Überhitzung des Destillationsbehälters verringert.

Dies ist allerdings nur dann sicher gewährleistet, solange ein Lösemittelfilm vorhanden ist, der sich einfach verdampfen lässt, ohne das im Bodenbereich des Destillationsbehälters angesammelte Lösemittel stark zu erhitzen. Daher wird durch die Temperatursteuerung mittels Erfassung der Temperatur sowie Steuerung der Heizmittel ferner garantiert, dass einerseits die Temperatur des Destillstionsbehälters unterhalb einer kritischen Temperatur gehalten wird, ab der der Behälter Schaden nehmen könnte, und andererseits auch das Lösemittel unterhalb seines Siedepunktes bleibt, wodurch es nicht zu einer Blasenbildung durch den Siedevorgang kommt, durch den gegebenenfalls Fremdstoffe, die beim Aufplatzen der Blasen in das Behälterinnere hineingeschleudert werden, mit dem Destillat mitgerissen werden könnten, und somit die Reinheit des zu gewinnenden Produktes beieinträchtigen. Dies ist insbesondere daher wichtig, da beispielsweise für die Endbehandlung von Halbleiterkörpern hochreine technische Fluorwasserstoffsäure benötigt wird.

Es ist somit möglich, eine Oberflächenverdampfung einer Flüssigkeit bzw. eines Lösemittels unterhalb der Siedetemperatur des Lösemittels in einem in Rotation versetzten Behälter ohne Vakuum zu erzielen und dabei ein hochreines Destillat, beispielsweise einer aggressiven Chemikalie wie Fluorwasserstoffsäure, zu erhalten.

Ferner vorzugsweise ist der Temperatursensor ein Infrarotsensor, und ferner vorzugsweise ist dieser in der Nähe der Umfangsfläche des Destillationsbehälters angeordnet sowie in Rotationsrichtung dem Heizmittel nachgeordnet.

Die Verwendung eines Infrarotsensors zur Temperaturmessung ist besonders einfach durchführbar und daher sehr vorteilhaft. Durch die Nähe zur Umfangsfläche des Destillationsbehälters ist überdies eine besonders genaue Messung der Temperatur möglich. Ferner ist die Anordnung des Temperatursensors in Rotationsrichtung nach dem Heizmittel daher besonders vorteilhaft, da der Temperatursensor somit an einer Stelle angeordnet ist, an der der Lösemittelfilm zuerst aufgrund einer kompletten Verdampfung verschwindet, und in diesem Bereich somit die Oberflächentemperatur des Destillationsbehälters am höchsten ist. Auf diese Weise kann besonders effektiv eine Beschädigung des Destillationsbehälters kontrolliert und vermieden sowie gleichzeitig auch die Lösemitteltemperatur kontrolliert werden, um ein Sieden des Lösemittels L zu verhindern.

Als Heizmittel können vorzugsweise Strahlungs-Heizmittel, vorzugsweise Halogen-Heizstrahler verwendet werden, welche gegenüber anderen Heizelementen insbesondere sehr preisgünstig verfügbar sind. Außerdem kann an dieser Stelle auf speziell für die Vorrichtung anzufertigende Heizelemente verzichtet werden.

Des Weiteren weist das Kühlsystem vorzugsweise eine Kondensationsspirale sowie einen Kühler auf. Durch die Spirale wird der Weg des Destillats durch das Kühlsystem verlängert, und somit eine ausreichende und effektive Kondensation erzielt.

Der Kühler weist dabei vorzugsweise einen Ventilator auf, welcher gleichzeitig als Absaugung dient. Auf die Weise wird die Anzahl der Bauteile reduziert, da der Ventilator einmal zur Kühlung des Destillats in der Kondensationsspirale, beispielsweise durch Ansaugen von Luft, dient, und gleichzeitig eventuell aus der Subboiling-Apparatur austretende Dämpfe, die besonders bei hoch aggressiven Chemikalien ätzend oder sonst wie schändlich sein können, sicher abgesaugt werden. Zum Erkennen von Schäden einer Subboiling-Apparatur kann dazu der Ventilator ferner einen säureempfindlichen Sensor aufweisen, mittels dem der Gehalt eines gegebenenfalls schädlichen Dampfes etc. in der Umgebungsluft der Apparatur gemessen und kontrolliert werden kann.

Zur Entlüftung des Systems und ferner als Staubschutz weist der Kondensatbehälter eine Öffnung auf, die besonders vorteilhafter Weise zur Umgebung des Ventilators hin gerichtet ist. Auf die Weise können schädliche Dämpfe direkt zur Absaugung des Ventilators gelangen, wo sie aufgefangen und gegebenenfalls entsprechend gefiltert werden können.

Die Apparatur weist ferner vorteilhafter Weise eine Pumpe zum Zuführen von Lösemittel in den Destillationsbehälter auf. Auf diese Weise ist es möglich, dass Lösemittel auch während des Destillationsprozesses ohne aufwendige Demontage einzelner Bauteile nachgefüllt werden kann bzw. das Lösemittelniveau in dem Destillationsbehälter während des Destillationsvorgangs eingestellt und/oder konstant gehalten werden kann, wodurch folglich eine kontinuierliche Destillation ermöglicht ist.

Es ist alternativ auch denkbar, dass die Subboiling-Apparatur einen Lösemittelbehälter aufweist, welcher direkt in Fluidkommunikation zum Destillationsbehälter steht, und ferner die Pumpe, welche an einer Entlüftung des Kondensatbehälters angebracht ist, derart ausgebildet ist, dass durch Anlegen eines Vakuums an besagter Entlüftung das Lösemittel aus dem Lösemittelbehälter in den Destillationsbehälter eingeleitet bzw. nachgefüllt werden kann. Besonders vorzugsweise sind die Öffnung und die Entlüftung identisch. Es ist somit möglich, auf einfache Weise die Entlüftung des Systems vorzunehmen und gleichzeitig kontinuierlich Lösemittel in den Destillationsbehälter nachzuführen, um eine fortlaufende Destillation einfach und sicher zu gewährleisten.

Zudem kann die Pumpe vorzugsweise auch dazu verwendet werde, Transportgas anzusaugen und dieses mit Hilfe einer Leitung in den Destillationsbehälter einzuführen. Dabei wird das Transportgas vorzugsweise mit Hilfe eines speziellen Filters vor dem Eintritt in die Subboiling-Apparatur gefiltert, um eine Partikelverunreinigung des Transportgases und der Subboiling-Apparatur zu vermeiden. Die Entlüftung ermöglicht dabei ein Ausscheiden des Transportgases aus der Subboiling-Apparatur. Hierdurch wird ein effizienterer Destillationsprozess ermöglicht da der Lösungsmitteldampf effizienter in die Kühlspiralen überführt wird.

Die Pumpe kann vorzugsweise wahlweise mit dem Lösemittelbehälter oder dem Filter für Transportgas in Fluidkommunikation gebracht werden. Hierzu ist vorzugweise ein Umschaltventil zwischen Pumpe, Lösemittelbehälter und Filter angeordnet. Auf diese Weise kann selektiv gefiltertes Transportgas oder Lösemittel aus dem Lösemittelbehälter in den Destillationsbehälter eingeleitet bzw. nachgefüllt werden.

Ferner kann der Destillationsbehälter einen Niveausensor zum Messen des Lösemittelniveaus innerhalb des Destillationsbehälters aufweisen, wobei der Niveausensor steuertechnisch mit der Pumpe verbunden ist. Auf diese Weise kann beispielsweise das Einstellen eines vorbestimmten Lösemittelniveaus oder ein Konstanthalten des Lösemittels innerhalb des Destillationsbehälters sicher und einfach gewährleistet werden.

Aus Sicherheitsgründen kann ferner unterhalb des Destillationsbehälters, des Kühlsystems und/oder des Kondensatbehälters wenigstens ein Auffangbecken angeordnet sein, welches mit einem Sensor zur Erkennung von Lösemittel bzw. Destillat oder Kondensat in dem Auffangbecken ausgestattet ist. Auf diese Weise kann ein Leck oder eine sonstige Beschädigung in der Subboiling-Apparatur unmittelbar festgestellt und das System sicher abgeschaltet werden.

Besonders vorteilhafter Weise sind alle mit dem Lösemittel und Destillat in Berührung kommenden Teile der Subboiling-Apparatur aus PTFE hergestellt. Somit können auf sichere Weise auch Stoffe, welche beispielsweise Glas etc. angreifen, sicher destilliert werden. Insbesondere zu nennen ist hier die Flourwasserstoffsäure.

Weitere Merkmale, Vorteile und Eigenschaften der Erfindung sollen nunmehr anhand eines Ausführungsbeispiels und der Figur der begleitenden Zeichnung erläutert werden.

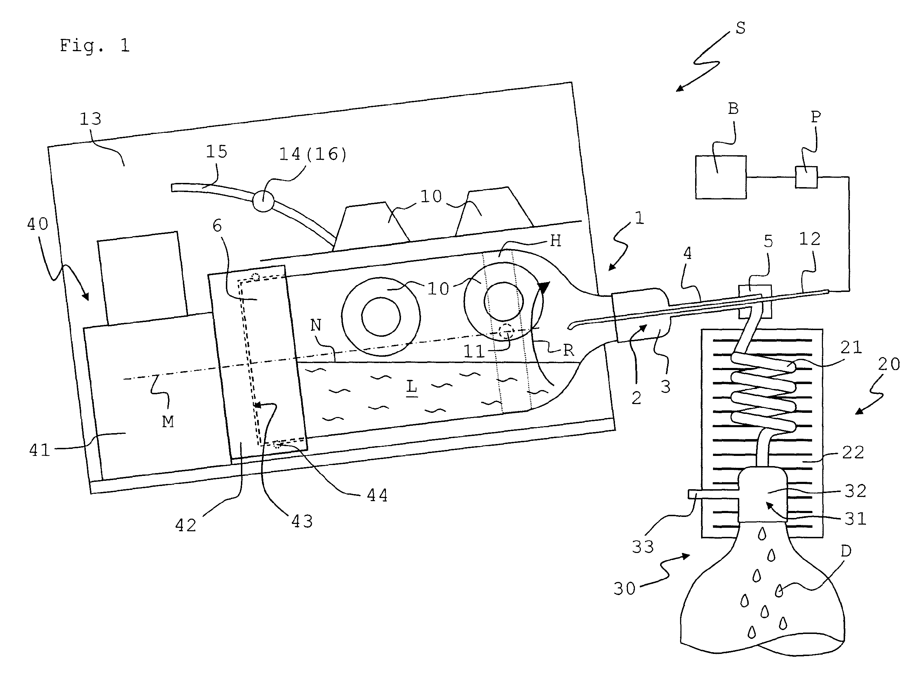

Die einzige Figur 1 zeigt ein Ausführungsbeispiel eines erfindungsgemäßen Aufbaus der Subboiling-Apparatur S.

Die Subboiling-Apparatur S weist dabei einen Destillationsbehälter 1, ein Kühlsystem 20 sowie einen Kondensatbehälter 30 auf, die im Folgenden näher beschrieben sind.

Der Destillationsbehälter 1 weist vorzugsweise eine nichtsphärische Form, besonders vorzugsweise eine im Wesentlichen zylindrische Form auf und dient zur Aufnahme eines zu destillierenden Lösemittels L. Der Destillationsbehälter 1 ist vorzugsweise um seine Rotations-Symmetrieachse M drehbar gelagert, wobei der Destillationsbehälter 1 ferner vorzugsweise waagerecht angeordnet ist, d.h. mit seiner Rotations-Symmetrieachse M parallel zur Waagerechten.

Durch die Rotation des Destillationsbehälter 1 entsteht aufgrund der Viskosität des darin befindlichen Lösemittels L und dessen damit verbundener begrenzter Ablaufgeschwindigkeit ein dünner Film der Flüssigkeit auf der Behälteroberfläche. Aufgrund der nichtsphärischen, vorzugsweise im Wesentlichen zylindrischen Form des Destillationsbehälters 1 ist dessen Oberfläche, im Vergleich zu der eines sphärischen Behälters, vergrößert, so dass also ein dünner Lösemittelfilm mit einer großen Oberfläche für die Destillation zur Verfügung steht. Durch die im Wesentlichen waagerechte Anordnung der Drehachse M des Destillationsbehälters 1 wird die mit dem Lösemittelfilm zu benetzende Oberfläche des Destillationsbehälters 1 ferner maximiert.

Aufgrund der unter anderem sehr aggressiven Chemikalien, wie beispielsweise Flourwasserstoffsäure, ist der Destillationsbehälter 1 vorzugsweise aus chemikalienresistentem Material, vorzugsweise aus PTFE-Material hergestellt. Daher können auf sichere Weise auch Stoffe, welche beispielsweise Glas etc. angreifen, sicher in dem Destillationsbehälter 1 aufgenommen und destilliert werden. Neben PTFE sind selbstverständlich auch alle anderen bekannten Materialien für den Einsatz entsprechender, insbesondere aggressiver Stoffe verwendbar.

Das Material des Destillationsbehälters 1 ist ferner vorzugsweise strahlungstransparent, insbesondere infrarottransparent, so dass sich der Destillationsbehälter 1 bei entsprechender Hitzebestrahlung nur geringfügig selbst aufwärmt, während der Großteil der Strahlung zur Destillation des Lösemittels L, also des Lösemittelfilms auf der Destillationsbehälteroberfläche bzw. Destillationsbehälterinnenwand, zur Verfügung steht.

An einem Ende des Destillationsbehälters weist dieser eine Öffnung 2 auf, die als Auslass für das Destillat dient. Wie im Weiteren noch näher erläutert, kann die Öffnung gleichzeitig auch als Einlass für das Lösemittel L dienen. Die Öffnung 2 ist vorzugsweise in Form eines Flaschenhalses geformt.

Die Öffnung 2 ist vorzugsweise mit einer Wärmekupplung 3, im Folgenden auch Verschluss genannt, verschlossen, die an ihrer Innenwandung vorzugsweise eine Dichtung (nicht gezeigt) mit einer Dichtungslippe aufweist, so dass der Verschluss bzw. die Wärmekupplung 3 des Destillationsbehälters 1 letzteren sicher nach außen abdichtet und die Wärmekupplung 3 ferner relativ zum Destillationsbehälter 1 in Rotationsrichtung R bewegbar ist. Somit kann beispielsweise der Verschluss 3 rotationstechnisch fixiert werden, während sich der Destillationsbehälter 1 um seine Rotations-Symmetrieachse M dreht.

Vorzugsweise über einen Schlauch 4 ist der Destillationsbehälter 1 mit dem Kühlsystem 20 verbunden, so dass diese in Fluidkommunikation zueinander stehen. Der Schlauch 4 kann dabei integral mit dem Verschluss 3 des Destillationsbehälters 1 ausgebildet oder auch als separates Teil zwischen der Öffnung 2 des Destillationsbehälters 1 und dem Kühlsystem 20 angeordnet sein. Durch die Wärmekupplung 3 bleibt auch der Schlauch 4 in Rotationsrichtung R fixiert, wodurch ein Verdrehen, Knicken oder gar Herausrutschen des Schlauches 4 sicher vermieden werden kann. Der Schlauch 4 ist vorzugsweise ebenfalls aus chemikalienresistentem Material, besonders vorzugsweise aus PTFE-Material hergestellt. Es sei noch angemerkt, dass der Schlauch 4 jegliche bekannte Verbindungsform zur Fluidkommunikation zwischen Behältern aufweisen kann.

Über einen Kupplungsblock 5 kann der Schlauch 4 umgelenkt werden, um eine Relativbewegung zwischen Destillationsbehälter 1 und Kühlsystem 20 auszugleichen.

An den Schlauch 4 schließt sich eine Kondensationsspirale 21 des Kühlsystems 20 an. Die Kondensationsspirale 21 kann dabei integral mit dem Schlauch 4 ausgebildet sein. Es ist auch denkbar, dass die beiden Teile als separate Teile ausgebildet und beispielsweise mittels eines Adapters fluidtechnisch verbunden sind. Ferner ist die Kondensationsspirale 21 vorzugsweise ebenfalls aus chemikalienresistentem Material, besonders vorzugsweise aus PTFE-Material hergestellt. Aufgrund der spiralförmigen Anordnung der Kondensationsspirale 21 wird der Weg des Destillats durch das Kühlsystem verlängert, wodurch eine ausreiche Kondensation gewährleistet werden kann.

Das Kühlsystem 20 weist neben der Kondensationsspirale 21 ferner einen Kühler 22 auf. Dieser Kühler 22 kann in jeglicher Form bekannter Kühler ausgebildet sein, wie beispielsweise einem Wasserkühler oder einem Luftkühler.

In einer besonders bevorzugten Ausführungsform, wie in Figur 1 gezeigt, ist der Kühler 22 als Luftkühler ausgebildet, welcher mittels eines Ventilators (nicht dargestellt) Luft ansaugt und damit die Wärme von der Kondensationsspirale 21 abträgt und auf diese Weise für eine ausreichende Kühlung und folglich Kondensation sorgt. Dabei dient der Ventilator gleichzeitig als Absaugung für das System, so dass eventuell austretende, schädliche Stoffe bzw. Dämpfe sicher von dem System wieder aufgefangen und entsprechend gefiltert oder auf sonstige Weise eingefangen und/oder unschädlich gemacht werden können.

Die Kondensationsspirale 21 ist ferner mit einem Kondensatbehälter 30 verbunden, so dass das Kühlsystem 20 mit dem Kondensatbehälter 30 in Fluidkommunikation steht. In den Kondensatbehälter 30 wird schließlich das kondensierte Destillat D aufgefangen und gesammelt. Daher ist auch der Kondensatbehälter 30 vorzugsweise aus einem chemikalienresistenten Material, besonders vorzugsweise aus PTFE-Material hergestellt. Die Kondensationsspirale 21 ist dabei vorzugsweise durch eine Öffnung 31 des Kondensatbehälters 30 in diesen eingeführt. Besonders vorzugsweise weist der Kondensatbehälter 30 ebenfalls einen Verschluss 32 zum Verschließen der Öffnung 31 auf, durch den das Ende der Kondensationsspirale 21 in den Kondensatbehälter 30 eingeführt ist. Es ist auch denkbar, dass die Kondensationsspirale 21 mit dem Verschluss 32 integral ausgebildet ist.

Der Kondensatbehälter 30 weist ferner eine Öffnung bzw. Entlüftung 33 auf. Die Öffnung 33 kann dabei vorzugsweise mit dem Verschluss 32 integral ausgebildet sein. Diese ist ferner vorzugsweise zur Umgebung des Ventilators hin gerichtet, so dass gegebenenfalls austretende Dämpfe durch die Absaugung des Kühlsystems 20 aufgefangen werden können. Hierzu weist der Ventilator ferner vorzugsweise einen säureempfindlichen Sensor (nicht dargestellt) zum Erkennen etwaiger schädlicher Stoffe auf, um somit Schäden an der Subboiling-Apparatur S festzustellen.

Bei der Wahl eines anderen Kühlers, anstelle des Luftkühlers mit Ventilator, kann eine separate Absaugung, vorzugsweise mit entsprechenden Sensoren, vorgesehen sein, um eventuell austretende Dämpfe sicher abzusaugen.

Um eine Rotation des Destillationsbehälters 1 durchführen zu können, wird dieser mittels eines motorischen Rotationsantriebs 40 angetrieben. Der Rotationsantrieb 40 weist dabei vorzugsweise einen Elektromotor 41 sowie eine von diesem rotatorisch angetriebene Aufnahme 42 auf. Der Destillationsbehälter 1 wird dabei vorzugsweise mit seinem der Öffnung 2 gegenüberliegenden Ende 6 an der Aufnahme 42 befestigt und mittels dieser über den Elektromotor 41 um seine Rotations-Symmetrieachse M bezüglich der nichtsphärischen, vorzugsweise im Wesentlichen zylindrischen Form des Destillationsbehälters 1 insbesondere während des Destillationsvorgangs rotiert.

Die Aufnahme 42 kann dabei derart ausgestaltet sein, dass sie eine Vertiefung 43 aufweist, in die der Destillationsbehälter 1 einsetzbar ist. Vorzugsweise mittels eines an der Innenumfangswand der Vertiefung 43 angeordneten O-Rings kann der Destillationsbehälter 1 beim Einsetzen in die Aufnahme 42 verklemmt und somit befestigt werden. Es ist aber auch denkbar, dass der Destillationsbehälter 1 auf andere Weise mit der Aufnahme 42 verbunden ist, beispielsweise mittels einer Schraubverbindung. Somit kann der Destillationsbehälter 1 auf einfache und schnelle Weise sicher in dem System angeordnet werden.

Die Subboiling-Apparatur S weist ferner wenigstens ein Heizmittel 10, im Folgenden auch Heizelement genannt, auf. Als Heizelement 10 werden vorzugsweise Strahlungs-Heizmittel, insbesondere Infrarotstrahler eingesetzt. Besonders vorzugsweise werden als Heizelemente 10 Halogen-Heizstrahler eingesetzt, da diese, im Vergleich zu anderen Heizstrahlern, besonders preisgünstig sind. Es ist allerdings auch denkbar, andere Heizstrahler einzusetzen, wie beispielsweise eine Höhensonne. Die Heizelemente 10 sollten dabei vorzugsweise derart ausgestaltet sein, dass ihre Wärmestrahlung wenigstens den Durchmesser des Destillationsbehälters 1 durchdringt, und dass sie zudem möglichst breitflächig abstrahlen, um daher mit einer geringen Anzahl an Heizelementen 10 eine ausreichende Heizleistung zu erzielen.

Die Heizelemente 10 sind derart angeordnet, dass sie den Lösemittelfilm ausreichend erwärmen. Besonders vorzugsweise sind die Heizelemente 10 dabei oberhalb des Lösungsmittelniveaus N angeordnet. Auf diese Weise werden lediglich die Bereiche des Destillationsbehälters 1 erwärmt, auf den sich aufgrund der durch den Rotationsantrieb 40 hervorgerufenen Rotationsbewegung des Destillationsbehälters 1 ein Lösemittelfilm befindet. Somit kann mit einer Temperatur deutlich unterhalb des Siedepunktes das Lösemittel L destilliert werden.

Durch den räumlichen Abstand der Heizelemente 10 zu dem im unteren Bereich des Destillationsbehälters 1 angesammelten Lösemittels L wird letzteres nur gering, jedenfalls unterhalb des Siedepunktes, erwärmt, während der Lösemittelfilm selbst effektiv verdampft und das Lösemittel L somit unterhalb seines Siedepunktes destilliert werden kann. Folglich wird auch die beim Sieden hervorgerufene Blasenbildung vermieden, was aufgrund des Mitreißens von Schmutzpartikeln und Ähnlichem zu einer Verunreinigung des Destillats führen würde. Auch ist ein deutlich geringerer Energieaufwand erforderlich, da der dünne Lösemittelfilm eine sehr große Oberfläche bietet, die durch direkte Wärmeeinstrahlung deutlich einfacher und schneller zu verdampfen ist, als das im unteren Bereich des Destillationsbehälters 1 angesammelte Lösemittel L mit verhältnismäßig kleiner Oberfläche. Insbesondere durch die Strahlungstransparenz, vorzugsweise die Infrarottransparenz, des Destillationsbehälters 1 kann somit eine gezielte Erwärmung und Destillation des Lösemittelfilms erreicht werden, ohne das Lösemittel L, vor allem das im Bodenbereich des Destillationsbehälters 1 angesammelte Lösemittel L, bis zu seiner Siedetemperatur zu erwärmen.

Des Weiteren ist durch die Verwendung berührungsloser Heizelemente 10 die Rotation des Destillationsbehälters 1 bei fixierten Heizelementen 10 möglich. Somit können die Heizmittel 10 immer auf den Lösemittelfilm gerichtet bleiben und nicht auf das im Boden des Destillationsbehälters angesammelten Lösemittel L. Auf diese Weise wird eine effektive Destillation des Lösemittels L gewährleistet, während selbiges nicht die Siedetemperatur erreicht, da der dünne Lösemittelfilm aufgrund seiner großen Oberfläche bei sehr geringer Dicke deutlich einfacher zu verdampfen und destillieren ist.

Durch die Rotation des Destillationsbehälters 1 wird ferner gewährleistet, dass auch eine gleichmäßige Erwärmung entlang der gesamten Umfangsfläche des Destillationsbehälters 1 erzielt wird, wodurch der Destillationsprozess einfach und gleichmäßig durchführbar sowie auch kontrollierbar ist. Es ist daher auf einfache Weise möglich, mit geringem Apparaturaufwand und geringem Energieaufwand ein hochreines Destillat D zu erhalten.

Es sei angemerkt, dass die Anzahl der Heizelemente 10 durch die Erfindung nicht beschränkt ist. In Figur 1 sind vier Heizelemente 10 dargestellt, es können aber, je nach Anforderungen an das Lösemittel L, die Apparaturgröße, die Rotationsgeschwindigkeit, die Leistung der Heizelemente 10, etc. eine beliebige Anzahl Heizelemente 10 gewählt werden.

Die Subboiling-Apparatur S weist zudem einen Temperatursensor 11 zur Erfassung der Oberflächentemperatur des Destillationsbehälters 1 bzw. der Lösemitteltemperatur auf. Bei dem Temperatursensor 11 handelt es sich vorzugsweise um einen Infrarotsensor. Dieser ist besonders vorzugsweise in der Nähe der Umfangsfläche des Destillationsbehälters 1 angeordnet, um somit bestmöglich die Oberflächentemperatur des Destillationsbehälters 1 bzw. mittelbar die Temperatur des Lösemittels L zu messen und zu kontrollieren. Der Sensor 11 ist dabei in besonders vorteilhafter Weise in Rotationsrichtung R des Destillationsbehälters 1 den Heizelementen 10 nachgeordnet. Mit anderen Worten heißt das, dass in Rotationsrichtung R entlang der Oberfläche des Destillationsbehälters 1 und oberhalb des Lösemittelniveaus N zunächst ein oder mehrere Heizelemente 10 vorzugsweise in Reihe und ferner vorzugsweise ein wenig beabstandet von der Oberfläche des Destillationsbehälters 1 angeordnet sind, und der Rotationsrichtung R weiter folgend nach den Heizelementen 10 der Sensor 11 angeordnet ist. Vorteilhafterweise befindet sich der Sensor 11 dabei ebenfalls oberhalb des Lösemittelniveaus N.

In besonders vorteilhafter Weise ist der Sensor 11 an der Stelle oberhalb des Lösemittelniveaus N nahe der Umfangsfläche des Destillationsbehälters 1 angeordnet, an der aufgrund der Heizelemente 10 der Lösemittelfilm als erstes verschwinden, d.h. komplett destillieren wird. Dieser Bereich, auch Heizzone H genannt, befindet sich meist an der Stelle, an der der Lösemittelfilm bei Rotation des Destillationsbehälters 1 den längsten Weg in Rotationsrichtung R zurücklegt und den gleichzeitig die Heizelemente 10 direkt und mittig anstrahlen. Die Anordnung des Sensors 11 an der Heizzone H und den Heizelementen 10 in Rotationsrichtung R nachgeordnet hat den Grund, da an den Stellen, an denen der Lösemittelfilm als erstes verdampft ist, die Wärmestrahlung der Heizelemente 10 nicht mehr von dem Lösemittelfilm zur Destillation aufgenommen wird, sondern gänzlich von der Oberfläche des Destillationsbehälters 1 absorbiert wird. Die Oberflächentemperatur des Destillationsbehälters 1 ist folglich an besagten Stellen, also im Bereich der Heizzone H, am höchsten. Aufgrund der erfindungsgemäßen Anordnung des Sensors 11 kann somit einerseits eine Überhitzung des Destillationsbehälters 1 kontrolliert werden, andererseits kann dadurch ferner mittelbar die Temperatur des Lösemittels L erfasst und kontrolliert werden.

Außerdem weist die Subboiling-Apparatur eine Temperatursteuerung (nicht gezeigt) auf, welche die Heizelemente 10, basierend auf der durch den Temperatursensor 11 erfassten Temperatur, derart steuert, dass die Lösemitteltemperatur möglichst konstant unterhalb des Siedepunktes gehalten wird. Die Steuerung der Heizelemente 10 kann dazu beispielsweise mittels einer Pulsweitenmodulation (PWM) derart geregelt werden, dass die Heizelemente 10 bei Überschreiten eines vorbestimmten Schwellenwertes, im Folgenden auch Temperaturschwellenwert genannt, bei dem beispielsweise eine Beschädigung des Destillationsbehälters 1 durch Überhitzung oder das Sieden des Lösemittels L befürchtet werden muss, ausgeschaltet und bei Unterschreiten dieses Schwellenwertes wieder eingeschaltet werden, so dass eine konstante Destillation unterhalb des Siedepunktes des Lösemittels L durchgeführt werden kann.

Wie bereits erwähnt, ist die Drehachse bzw. Rotationsachse des Destillationsbehälters 1, welche mit dessen Rotationssymmetrieachse M zusammenfällt, im Wesentlichen waagerecht angeordnet. Um das Aufnahmevolumen des Destillationsbehälters 1 weiter zu erhöhen ist es denkbar, den Destillationsbehälter 1 leicht zu neigen, so dass die Öffnung 2 des Destillationsbehälters 1 etwas nach oben geschwenkt ist. Beispielsweise kann hier ein Neigungswinkel der Rotationsachse M von ca. 10° zur Waagerechten angenommen werden.

Die Befüllung des Destillationsbehälters 1 mit Lösungsmittel L kann ferner optimiert werden, in dem die Öffnung 2 des Destillationsbehälters 1 verkleinert wird, wodurch das Lösemittelniveau N angehoben werden kann, ohne dass Lösemittel L aus der Öffnung 2 des Destillationsbehälters 1 fließen kann.

Um eine konstante und andauernde Destillation zu gewährleisten, kann ferner eine Lösemittelzuführleitung 12, im Folgenden Leitung genannt, zum Zuführen von Lösemittel L in den Destillationsbehälter 1 vorgesehen sein. In einer besonders bevorzugten Ausführungsform ist diese Leitung 12 wenigstens von außen durch den Verschluss 3 des Destillationsbehälters 1 in diesen eingeführt, wobei eine entsprechende Dichtung ein Austreten des Destillats bzw. des Lösemittels L verhindert. Es ist auch denkbar, dass die Leitung 12 in den Schlauch 4 von außen eindringt und über diesen in den Destillationsbehälter 1 hineinragt. In diesem Fall würde die Abdichtung zur Umgebung beispielsweise durch den Kupplungsblock 5 übernommen.

Zur Zuführung des Lösemittels L in den Destillationsbehälter 1 ist beispielsweise denkbar, dass das Lösemittel L aus einem Lösemittelbehälter B mittels einer Pumpe P, vorzugsweise einer chemikalienresistenten Pumpe, in den Destillationsbehälter 1 über die Leitung 12 zugeführt wird. Hierzu kann die Subboiling-Apparatur S beispielsweise mit einem Niveausensor (nicht dargestellt) derart versehen sein, dass dieser das Lösemittelniveau N im Destillationsbehälter 1 ermittelt und kontrolliert. Mittels einer Zuführsteuerung kann dann, basierend auf den Ergebnissen des Lösemittelsensors, die Pumpe P derart angesteuert werden, dass ein vorbestimmtes Lösungsmittelniveau N eingestellt bzw. das Lösemittelniveau N konstant auf einem vorgegebenen Wert gehalten wird. Somit ist eine einfache Zuführung von Lösemittel L vor, während und nach dem Destillationsprozess ohne aufwendige Demontage einzelner Bauteile der Subboiling-Apparatur S möglich.

Es ist aber auch denkbar, dass die Leitung 12 auf dem in den Destillationsbehälter 1 hineinragenden gegenüberliegenden Ende direkt mit einem Lösemittelbehälter in Verbindung steht. In diesem Fall kann das Zuführen von Lösemittel L in den Destillationsbehälter 1 derart gewährleistet werden, dass eine Pumpe an einer Öffnung des Kondensatbehälters 30, vorzugsweise der Entlüftung 33, angebracht ist, und durch Anlegen eines Vakuums an der Entlüftung 33 aufgrund der Fluidkommunikation zwischen Lösemittelbehälter und Entlüftung 33, das Lösemittel L aus dem Lösemittelbehälter in den Destillationsbehälter 1 eingeleitet bzw. nachgeführt wird. Eine Steuerung der Pumpe wie im zuvor beschriebenen Fall ist ebenfalls denkbar. Es ist somit auf einfache Weise möglich, gleichzeitig die Entlüftung des Systems vorzunehmen und kontinuierlich Lösemittel L in den Destillationsbehälter 1 nachzuführen, um insbesondere eine fortlaufende Destillation einfach und sicher zu gewährleisten.

Die Leitung 12 kann während des Destillationsprozesses zudem als Transportgaszuführung eingesetzt werden. Hierzu saugt die Pumpe P ein Transportgas, zum Beispiel die Umgebungsluft, durch einen Filter (nicht dargestellt) an und fördert das Transportgas durch die Leitung 12 in den Destillationsbehälter 1. Hierdurch wird der Lösungsmitteldampf effizienter in die Kühlspiralen 21 überführt und somit die Effizienz des Destillationsprozesses gesteigert. Die Entlüftung 33 ermöglicht ein Ausscheiden des Transportgases. Die Filter sind vorzugsweise derartig aufgebaut, dass jegliche Partikelverunreinigung des Transportgases vermieden werden kann.

In einer bevorzugten Ausführungsform kann die Pumpe P wahlweise mit dem Lösemittelbehälter 1 oder dem Filter für Transportgas in Fluidkommunikation gebracht werden. Hierzu ist vorzugweise ein Umschaltventil (nicht dargestellt) zwischen Pumpe P, Lösemittelbehälter 1 und Filter angeordnet. Auf diese Weise kann selektiv gefiltertes Transportgas oder Lösemittel aus dem Lösemittelbehälter in den Destillationsbehälter eingeleitet bzw. nachgefüllt werden. Das Umschaltventil ist vorzugsweise eine Rundsäule mit zwei Bohrungsebenen, die eine verwechslungsfreie Umschaltung gewährleisten.

Um ein Verschwenken der Apparatur, insbesondere des Destillationsbehälters 1, einfach zu gewährleisten, sind der Rotationsantrieb 40, an dem der Destillationsbehälter 1 angebracht wird, sowie die Heizelemente 10 vorzugsweise an einer schwenkbaren Halterung 13 befestigt, welche beispielsweise über einen Bolzen 14 entlang einer Führungsschiene 15 in der Halterung 13 verschenkbar ist. Zur Fixierung kann der Bolzen 14 gleichzeitig als Fixierelement 16 ausgebildet sein. Die Verschwenkung der Halterung 13 kann jedoch auch auf andere bekannte Weise durchgeführt werden. Wie schon beschrieben, kann bereits durch geringes Verschwenken der Subboiling-Apparatur S bzw. wenigstens des Destillationsbehälters 1 das Aufnahmevolumen des letztgenannten deutlich erhöht werden.

Es sei noch angemerkt, dass die Subboiling-Apparatur S sich durch zahlreiche Sicherheitsmerkmale auszeichnet.

Diese sind zum einen der säureempfindliche Sensor im Absaugesystem des Kühlers 20 bzw. Ventilators, mittels dem das Fluid aus der Entlüftung 33 oder sonstiger, ungewollt austretender, schädlicher Dampf gemessen wird. Mittels einer Steuerung kann somit bei überhöhten Werten die Subboiling-Apparatur S zur Vermeidung von Schäden an Personen oder der Apparatur selbst abgeschaltet werden.

Ferner der Sensor 11, um über eine Temperatursteuerung eine Beschädigung des Destillationsbehälters 1 beispielsweise bei Überschreiten eines vorgegebenen Temperaturschwellenwertes durch Abschalten der Heizelemente 10 zu vermeiden. Der Sensor 11 reagiert folglich auch dann, wenn gar kein Destillationsbehälter 1 eingesetzt ist, da der Sensor 11 bei eingeschalteten Heizelementen 10 direkt von diesen angestrahlt wird und es somit zu einer Übersteigung des vorher festgelegten Temperaturschwellenwerts kommt, und durch die Temperatursteuerung somit die Heizelemente 10 folglich ausgeschaltet werden.

Ferner kann ein Sensor, beispielsweise ein Berührungssensor, in der Aufnahme 42 vorgesehen sein, der das Vorhandensein und gegebenenfalls auch den richtigen Sitz des Destillationsbehälters 1 kontrolliert, und bei Nichtvorhandensein oder falschem Sitz des Destillationsbehälters 1 über eine Steuerung die Subboiling-Apparatur S abstellt bzw. diese nicht in Betrieb genommen werden kann.

Zudem kann unterhalb der Subboiling-Apparatur S, also unterhalb des Destillationsbehälters 1, des Kühlsystems 20 und/oder des Kondensatbehälters 30 wenigstens ein Auffangbecken (nicht dargestellt) angeordnet sein, welches ebenfalls mit Sensoren ausgestattet ist, die ein Lösemittel bzw. Destillat oder Kondensat in dem Auffangbecken erkennen und mittels einer Steuerung die Subboiling-Apparatur S daraufhin abstellen bzw. die Inbetriebnahme der Subboiling-Apparatur S nicht freigeben.

Darüber hinaus sind selbstverständlich alle weiteren bekannten Sicherheitsvorrichtungen aus dem Stand der Technik ebenfalls bei der vorliegenden Subboiling-Apparatur S einsetzbar.

Die Subboiling-Apparatur S weist ferner vorzugsweise ein Steuergerät (nicht gezeigt) auf, welches mit den Sensoren sowie den anzusteuernden Bauteilen der Subboiling-Apparatur S verbunden ist, um beispielsweise oben genannte steurungstechnische Aufgaben zu übernehmen. Basierend auf den ermittelten Werten der Sensoren kontrolliert das Steuergerät somit den Prozessablauf und regelt entsprechend beispielsweise die Heizelemente 10 (bspw. Abschalten bei Ende des Destillationsprozesses bzw. Abschalten bei Überschreiten des Temperaturschwellenwertes gemessen durch den Sensor 11 bzw. Abschalten bei Erkennen einer Beschädigung der Apparatur; Einschalten bei Beginn des Destillationsprozesses bzw. Einschalten bei Unterschreiten des Temperaturschwellenwertes; etc.), das Kühlsystem 20 (bspw. Ein- bzw. Ausschalten zu Beginn bzw. Ende des Destillationsprozesses; Regeln der Kühlleistung bspw. in Abhängigkeit von der Umgebungstemperatur, der Destillattemperatur usw.; etc.), den Rotationsantrieb 40 (bspw. Einschalten bei Beginn des Destillationsprozesses; Abschalten bei Ende des Destillationsprozesses bzw. Abschalten bei Defekt des Systems oder bei Unterschreiten eines vorgegebenen minimalen Lösemittelniveaus N; etc.), die Pumpe P (bspw. Fördern einer vorgegebenen Menge Lösemittel L zum Befüllen des Destillationsbehälters 1 bzw. Konstanthalten des Lösemittelniveaus N während des Destillationsprozesses; etc.).

Im Folgenden wird am Beispiel von Fluorwasserstoffsäure die Destillation mittels der erfindungsgemäßen Subboiling-Apparatur beschrieben.

Der Destillationsbehälter 1 wird in die Aufnahme 42 des Rotationsantriebs 40 eingesetzt und fixiert sowie mit dem Kühlsystem 20 und dieses wiederum mit dem Kondensatbehälter 30 wie beschrieben verbunden, so dass diese, in dieser Reihenfolge, in Fluidkommunikation stehen. Der Destillationsbehälter 1 kann dabei bereits mit Lösemittel L befüllt sein oder über eines der vorgenannten Anordnungen mit Hilfe der Pumpe P aus einem Lösemittelbehälter B mit Lösemittel L befüllt werden. Beispielsweise mittels eines Niveausensors kann das Lösemittel L bis zu einem vorgegebenen Lösemittelniveau N eingefüllt und auch während des im Folgenden beschriebenen Verfahrens auf besagtem Niveau N konstant gehalten werden.

In einem nächsten Schritt wird der Destillationsbehälter 1 mittels des Rotationsantriebs 40 in Rotation versetzt sowie die Heizelemente 10 eingeschaltet. Die Rotationsgeschwindigkeit sowie die Heizleistung sind dabei individuell auf das zu destillierende Produkt sowie die Apparatur abzustimmen. Durch die Rotation des Destillationsbehälters 1 entsteht an dessen Behälterinnenwand aufgrund der Viskosität des Lösemittels L ein Lösemittelfilm, welcher im Folgenden für den Destillationsprozess zu verdampfen ist. Mittels der Heizelemente 10 wird insbesondere der Lösemittelfilm erwärmt, wobei dies durch die Rotation mittels des Rotationsantriebs 40 ferner über die gesamte Oberfläche des Destillationsbehälters 1 gleichmäßig geschieht. Aufgrund der Strahlungstransparenz des Destillationsbehälters 1 wird dessen Oberfläche während des Destillationsvorgangs nur gering aufgewärmt, solange ein Lösemittelfilm, der die Strahlung des Heizelements 10 aufnimmt, vorhanden ist. Der Temperatursensor 11 misst dabei, den Heizelementen 10 nachgeschaltet, die Oberflächentemperatur des Destillationsbehälters 1. Basierend auf den durch den Temperatursensor 11 erfassten Temperaturen steuert die Temperatursteuerung die Heizelemente 10 derart, dass die Lösemitteltemperatur unterhalb ihres Siedepunktes bleibt. Fluorwasserstoffsäure hat beispielsweise eine Siedetemperatur von 120°C, so dass der Temperaturschwellenwert z.B. vorzugsweise mit 110°C, besonders vorzugsweise mit 100°C festgelegt wird.

Aufgrund des durch die Heizelemente 10 aufgeheizten Lösemittelsfilms verdampft bzw. destilliert dieser durch die Rotation des Destillationsbehälters 1 entstehende Lösemittelfilm oberhalb des Lösemittelniveaus N im Destillationsbehälter 1. Da die Wärmeenergie überwiegend zur Verdampfung des dünnen Lösemittelfilms aufgewendet und nur zu einem geringen Teil von der Destillationsbehälterwand aufgenommen wird, wird eine Überhitzung des Destillationsbehälters 1 vermieden.

Dies wird ebenfalls kontrolliert und gesteuert durch den Temperatursensor 11 bzw. die Temperatursteuerung, die ebenfalls ein Überhitzen des Destillationsbehälters 1 sowie ein Überschreiten der Siedetemperatur des Lösemittels L verhindern, indem die Heizelemente 10 bei Überschreiten des Temperaturschwellenwertes solange abgeschaltet werden, bis die Temperatur wieder unterhalb dieses Schwellenwertes fällt. Die Temperatursteuerung ist besonders genau, da der Sensor 11 vorzugsweise in der Heizzone H, also dort, wo der Lösemittelfilm zuallererst verdampft sein würde, angeordnet ist; wo also die höchsten Temperaturen auftreten.

Außerdem wird das im unteren Bereich des Destillationsbehälters 1 angesammelte Lösemittel L aufgrund dessen Abstandes zu den Heizelementen 10, die oberhalb des Lösemittelniveaus N angeordnet sind, nicht so stark erhitzt, wodurch eine Temperaturerhöhung über den Temperaturschwellenwert oder gar bis zur Siedetemperatur des Lösemittels L im Zusammenspiel mit der Temperatursteuerung sicher vermieden wird.

Das Destillat entweicht aus dem Destillationsbehälter 1 durch den Schlauch 4 in das Kühlsystem 20, wo es beim Durchlaufen der Kondensationsspirale 21 mit Hilfe des Kühlers 22 kondensiert. Über die Kondensationsspirale 21 fließt das Kondensat sodann in den Kondensatbehälter 30 ab.

Über die Öffnung 33 werden eine ausreichende Entlüftung sowie ein ausreichender Staubschutz gewährleistet. Ferner wird die austretende Luft aus der Öffnung 33 durch den Ventilator des Kühlers abgesaugt, so dass keine schädlichen Dämpfe in die Umgebung gelangen können.

Aufgrund der Verwendung von PTFE-Material oder einem anderem geeignete, vorzugsweise chemikalienresistenten Material für die mit dem Lösemittel L in Berührung kommenden Bauteile der Subboiling-Apparatur S sowie aufgrund der Sensoren und der damit verbundenen Steuerung, kann ferner ein sicherer Betrieb der Subboiling-Apparatur S auch bei der Destillation aggressiver Chemikalien sichergestellt werden.

Mittels der oben beschriebenen Subboiling-Apparatur S kann auf einfache Weise, ohne die Notwendigkeit eines Vakuums und unterhalb der Siedetemperatur, ein hochreines Produkt, insbesondere von aggressiven Chemikalien, durch Oberflächenverdampfung und unter Atmosphärendruck sowie mit direkter Überwachung der Oberflächentemperatur des Destillationsbehälters 1 mittels berührungsloser Sensorik für alle möglichen Chemikalien durch die Verwendung insbesondere von PTFE als Material für die Subboiling-Apparatur S und bei gleichzeitiger Oberflächenvergrößerung des Lösemittels durch die im wesentlichen zylindrische Form des Destillationsbehälters 1 und dessen Rotation sowie der im wesentlichen waagrechten Anordnung der Drehachse und ggf. automatischen Flüssigkeitszufuhr erhalten werden.

Die Erfindung beschränkt sich nicht auf die oben genannten Einschränkungen. Alle denkbaren Ausgestaltungsformen der genannten Ausführungsbeispiele werden durch diese Anmeldung abgedeckt. So sind beispielsweise der Neigungswinkel des Destillationsbehälters 1 sowie dessen Rotationsgeschwindigkeit und die Temperatur der Heizelemente sowie die Einstellung der Temperatursteuerung bzw. der gesamten Steuerung und Sensorik durch die Erfindung nicht eingeschränkt.

### Bezugszeichenliste

- 1: Destillationsbehälter
- 2: Öffnung des Destillationsbehälters
- 3: Verschluss des Destillationsbehälters
- 4: Schlauch
- 5: Kupplungsblock
- 6: der Öffnung 2 gegenüberliegendes Ende des Destillati- onsbehälters
- 10: Heizelement
- 11: Temperatursensor
- 12: Lösemittelzuführleitung
- 13: Halterung
- 14: Bolzen
- 15: Führungsschiene
- 16: Fixierelement
- 20: Kühlsystem
- 21: Kondensationsspirale
- 22: Kühler
- 30: Kondensatbehälter
- 31: Öffnung des Kondensatbehälters
- 32: Verschluss des Kondensatbehälters
- 33: Öffnung bzw. Entlüftung
- 40: Rotationsantrieb
- 41: Elektromotor
- 42: Aufnahme
- 43: Vertiefung
- 44: O-Ring
- B: Lösemittelbehälter
- D: Destillat
- H: Heizzone
- L: Lösemittel
- M: Dreh- bzw. Rotationsachse; Rotationssymmetrieachse
- N: Lösemittelniveau
- P: Pumpe
- R: Rotationsrichtung
- S: Subboiling-Apparatur

## Patentansprüche

1. Subboiling-Apparatur (S) zur Destillation insbesondere aggressiver Chemikalien, aufweisend:
einen strahlungstransparenten, nichtsphärischen Destillationsbehälter (1) zur Aufnahme eines zu destillierenden Lösemittels (L),
wenigstens ein Heizmittel (10) zum berührungslosen Erwärmen des Lösemittels (L),
einen Temperatursensor (11) zur Erfassung der Oberflächentemperatur des Destillationsbehälters (1) und/oder der Lösemitteltemperatur,
ein in Fluidkommunikation zum Destillationsbehälter (1) stehendes Kühlsystem (20), und
einen mit dem Kühlsystem (20) in Fluidkommunikation stehenden Kondensatbehälter (30) zum Sammeln des Destillats (D), wobei
der Destillationsbehälter (1) drehbar gelagert ist,
die Drehachse (M) des Destillationsbehälters (1) im Wesentlichen waagerecht angeordnet ist, und
eine Temperatursteuerung vorgesehen ist, die derart ausgebildet ist, dass, basierend auf der durch den Temperatursensor (11) erfassten Temperatur, die Heizelemente (10) derart angesteuert werden, dass die Lösemitteltemperatur unterhalb des Siedepunktes bleibt.

2. Subboiling-Apparatur (S) gemäß Anspruch 1, wobei der Destillationsbehälter (1) eine im Wesentlichen zylindrische Form aufweist.

3. Subboiling-Apparatur (S) gemäß einem der vorhergehenden Ansprüche, wobei der Temperatursensor (11) ein Infrarotsensor ist.

4. Subboiling-Apparatur (S) gemäß einem der vorhergehenden Ansprüche, wobei der Temperatursensor (11) in der Nähe der Umfangsfläche des Destillationsbehälters (1) angeordnet und in Rotationsrichtung (R) dem Heizelement (10) nachgeordnet ist.

5. Subboiling-Apparatur (S) gemäß einem der vorhergehenden Ansprüche, wobei die Heizmittel (10) Strahlungs-Heizmittel sind.

6. Subboiling-Apparatur (S) gemäß einem der vorhergehenden Ansprüche, wobei die Heizmittel (10) Halogen-Heizstrahler sind.

7. Subboiling-Apparatur (S) gemäß einem der vorhergehenden Ansprüche, wobei das Kühlsystem (20) aufweist:
eine Kondensationsspirale (21), welche mit dem Destillationsbehälter (1) und dem Kondensatbehälter (30) verbunden ist, und
einen Kühler (22).

8. Subboiling-Apparatur (S) gemäß Anspruch 7, wobei der Kühler (22) einen Ventilator aufweist, der gleichzeitig als Absaugung dient.

9. Subboiling-Apparatur (S) gemäß Anspruch 8, wobei der Ventilator einen säureempfindlicher Sensoren zum Erkennen von Schäden an der Subboiling-Apparatur (S) aufweist.

10. Subboiling-Apparatur (S) gemäß einem der Ansprüche 7 oder 8, wobei der Kondensatbehälter (30) eine Öffnung (33) aufweist, die zur Umgebung des Ventilators hin gerichtet ist.

11. Subboiling-Apparatur (S) gemäß einem der vorhergehenden Ansprüche, ferner aufweisend eine Pumpe (P) zum Zuführen von Lösungsmittel (L) in den Destillationsbehälter (1).

12. Subboiling-Apparatur (S) gemäß Anspruch 11, wobei ein Lösemittelbehälter direkt in Fluidkommunikation zum Destillationsbehälter (1) steht, und
die Pumpe (P) an einer Entlüftung (33) des Kondensatbehälters (30) angebracht ist und derart ausgebildet ist, dass durch Anlegen eines Vakuums an der Entlüftung (33) Lösemittel (L) aus dem Lösemittelbehälter in den Destillationsbehälter (1) eingeleitet wird.

13. Subboiling-Apparatur (S) gemäß Anspruch 10 und 12, wobei die Öffnung (33) und die Entlüftung (33) identisch sind.

14. Subboiling-Apparatur (S) gemäß einem der Ansprüche 11 bis 13, wobei der Destillationsbehälter (1) einen Niveausensor zum Messen des Lösemittelniveaus (N) im Destillationsbehälter (1) aufweist, und
der Niveausensor steuertechnisch mit der Pumpe (P) verbunden ist.

15. Subboiling-Apparatur (S) gemäß einem der vorhergehenden Ansprüche, wobei unterhalb des Destillationsbehälters (1), des Kühlsystems (20) und/oder des Kondensatbehälters (30) wenigstens ein Auffangbecken angeordnet ist, und
das Auffangbecken mit einem Sensor zur Erkennung von Lösemittel bzw. Destillat oder Kondensat in dem Auffangbecken ausgestattet ist.

16. Subboiling-Apparatur (S) gemäß einem der vorhergehenden Ansprüche, wobei alle mit dem Lösemittel (L) und Destillat (D) in Berührung kommenden Teile der Subboiling-Apparatur (S) aus chemikalienresistentem Material hergestellt sind.

17. Subboiling-Apparatur (S) gemäß einem der vorhergehenden Ansprüche, wobei alle mit dem Lösemittel (L) und Destillat (D) in Berührung kommenden Teile der Subboiling-Apparatur (S) aus PTFE hergestellt sind.
